# FASCICULE DE BREVET EUROPEEN

(11) **EP 3 324 131 B1**
(45) Date de publication et mention de la délivrance du brevet: **29.05.2019**
(21) Numéro de dépôt: 17203139.5
(22) Date de dépôt: 22.11.2017
(51) Int. Cl.: F24H 3/02, F24H 9/20, F24D 19/10, G05D 23/19, H05B 1/00

(54) **PROCÉDÉ DE RÉGULATION D'UN APPAREIL DE CHAUFFAGE ÉLECTRIQUE ET APPAREIL DE CHAUFFAGE ASSOCIÉ**
VERFAHREN ZUR REGULIERUNG EINES ELEKTRISCHEN HEIZGERÄTS, UND ENTSPRECHENDES HEIZGERÄT
REGULATING METHOD FOR AN ELECTRIC HEATER AND THE ASSOCIATED HEATER

(30) Priorité: 22.11.2016 FR 1661345
(43) Date de publication de la demande: 23.05.2018
(73) Titulaire: MULLER ET CIE, 75018 Paris (FR)
(72) Inventeur: MORARD, Jean Louis, 75018 PARIS (FR); HEMMER, Cédric, 75018 PARIS (FR)
(74) Mandataire: Lavoix

(56) Documents cités:
- EP-A2- 1 594 025
- DE-U1- 29 808 655
- GB-A- 1 071 781

## Description

La présente invention concerne un procédé de régulation d'un appareil de chauffage, du type comportant : une enveloppe définissant un espace intérieur et un espace extérieur audit appareil ; un élément chauffant électrique apte à convertir une énergie électrique en chaleur, situé dans l'espace intérieur ; un élément inertiel formé d'un matériau à inertie thermique, apte à emmagasiner la chaleur émise par l'élément chauffant électrique et à restituer ladite chaleur à un air extérieur à l'appareil ; un capteur d'une température dudit air extérieur ; ledit procédé de régulation comprenant un premier mode de fonctionnement de l'appareil, destiné à maintenir l'air extérieur à une première température T₁, et un deuxième mode de fonctionnement de l'appareil, destiné à maintenir l'air extérieur à une deuxième température T_{c} supérieure à la première température.

Dans un tel appareil de chauffage, dit à inertie thermique, la chaleur de l'élément chauffant est transférée à l'air extérieur par l'élément inertiel. Ainsi, les variations de température extérieure sont atténuées par rapport à un transfert direct, ce qui améliore le confort des utilisateurs.

Les procédés de régulation des appareils de chauffage électrique prévoient généralement un « mode économique » et un « mode confort », chacun visant à maintenir l'air extérieur à une température différente. Le mode économique, qui correspond à la température la plus basse, est généralement adopté en l'absence des utilisateurs. Lors du passage en mode confort, l'élément chauffant est alimenté en électricité pour faire remonter la température de la pièce. Un procédé selon le préambule de la revendication 1 est décrit dans EP 1 594 025 A2.

Dans un tel cas, la présence d'un élément inertiel ralentit la montée en température par rapport à un transfert de chaleur direct entre l'élément chauffant et l'air.

Une solution pour accélérer la montée en température est d'augmenter la puissance de chauffe maximale de l'appareil. Cette solution est néanmoins coûteuse en énergie.

La présente invention a pour but de proposer un appareil de chauffage permettant une montée rapide en température sans augmenter significativement le coût énergétique.

A cet effet, l'invention a pour objet un procédé du type précité, dans lequel : l'appareil de chauffage comprend en outre un dispositif de soufflage, apte à diriger un flux d'air vers l'élément chauffant électrique et/ou vers l'élément inertiel, ledit flux d'air étant en communication avec l'air extérieur ; et ledit procédé comprend les étapes suivantes : l'appareil étant dans le premier mode de fonctionnement et le dispositif de soufflage étant à l'arrêt, réception d'un ordre de passage au deuxième mode de fonctionnement ; puis augmentation de l'énergie électrique fournie à l'élément chauffant, et mise en marche du dispositif de soufflage ; puis arrêt du dispositif de soufflage si la température de l'air extérieur atteint une première valeur prédéterminée égale à T₁ + α(T_{c} - T₁), telle que 0< α ≤1.

Suivant d'autres aspects avantageux de l'invention, le procédé comporte l'une ou plusieurs des caractéristiques suivantes, prises isolément ou suivant toutes les combinaisons techniquement possibles :
- α est compris entre 70% et 99%, plus préférentiellement entre 80% et 95% ;
- lors de la mise en marche du dispositif de soufflage, ledit dispositif fonctionne selon un premier débit d'air d₁ ; puis si la température de l'air extérieur atteint une deuxième valeur prédéterminée égale à T₁ + β(T_{c} - T₁), avec 0< β < α, le dispositif de soufflage fonctionne selon un deuxième débit d'air d₂ tel que 0<d₂< d₁ ;
- le premier débit d'air est sensiblement constant et le deuxième débit d'air est décroissant dans le temps ;
- une première durée est mesurée entre un premier instant de mise en marche du dispositif de soufflage et un deuxième instant où la température de l'air extérieur atteint la deuxième valeur prédéterminée ; puis à compter dudit instant deuxième instant, un débit d'air du dispositif de soufflage varie selon un modèle de forme prédéterminée, configuré de sorte à faire diminuer ledit débit d'air entre les valeurs d₁ et 0 sur une deuxième durée calculée en fonction de la première durée ;
- β est compris entre 50% et 90%, plus préférentiellement entre 60% et 70% ;
- lors de l'augmentation de l'énergie électrique fournie à l'élément chauffant, une puissance électrique est fournie audit élément chauffant ; puis si la température de l'air extérieur atteint une troisième valeur prédéterminée égale à T₁ + γ(T_{c} - T₁), avec 0<γ < α, la puissance électrique fournie diminue ;
- l'appareil de chauffage comporte en outre un détecteur de présence à proximité dudit appareil ; le procédé comprenant en outre : une étape d'arrêt du dispositif de soufflage (20) lorsqu'une présence est détectée ; et une étape de remise en marche du dispositif de soufflage lorsqu'aucune présence n'est détectée, et si la température de l'air extérieur est inférieure à la première valeur prédéterminée.

L'invention se rapporte en outre à un appareil de chauffage comprenant : une enveloppe définissant un espace intérieur et un espace extérieur audit appareil ; un élément chauffant électrique apte à convertir une énergie électrique en chaleur, situé dans l'espace intérieur ; un élément inertiel formé d'un matériau à inertie thermique, apte à emmagasiner la chaleur émise par l'élément chauffant électrique et à restituer ladite chaleur à un air extérieur à l'appareil ; un capteur d'une température dudit air extérieur ; et un dispositif de soufflage, apte à diriger un flux d'air vers l'élément chauffant électrique et/ou vers l'élément inertiel, ledit flux d'air étant en communication avec l'air extérieur ; ledit appareil de chauffage étant muni de moyens de mise en oeuvre d'un procédé de régulation tel que décrit ci-dessus.

Suivant d'autres aspects avantageux de l'invention, l'appareil de chauffage comporte l'une ou plusieurs des caractéristiques suivantes, prises isolément ou suivant toutes les combinaisons techniquement possibles :
- l'élément inertiel forme une façade incluse dans l'enveloppe de l'appareil, ladite façade ayant une face interne orientée vers l'intérieur de l'appareil, l'élément chauffant électrique étant au contact de ladite face interne ;
- l'élément inertiel est formé d'un matériau apte à émettre un rayonnement infrarouge sous l'effet d'une augmentation de sa température ;
- le dispositif de soufflage comprend au moins un ventilateur, de préférence au moins deux ventilateurs, situé(s) dans l'espace intérieur.

L'invention sera mieux comprise à la lecture de la description qui va suivre, donnée uniquement à titre d'exemple non limitatif et faite en se référant aux dessins sur lesquels :
- la figure 1 est une vue schématique, en coupe, d'un appareil de chauffage selon un mode de réalisation de l'invention ;
- la figure 2 est une vue schématique d'un dispositif de régulation de l'appareil de la figure 1 ;
- la figure 3 représente sous forme de logigramme un procédé selon un mode de réalisation de l'invention ; et
- la figure 4 représente graphiquement des variations de température et de puissance fournie en fonction du temps, pour l'appareil de chauffage de la figure 1.

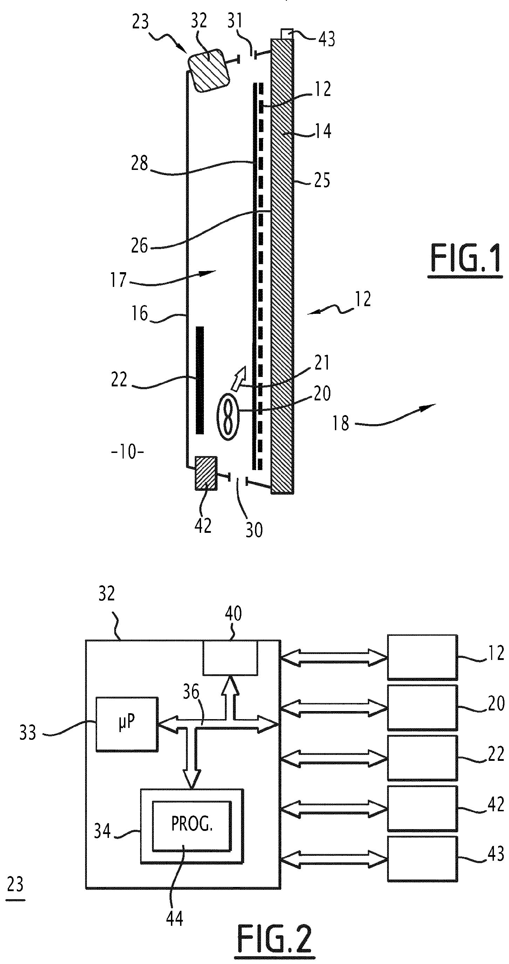

La figure 1 représente schématiquement, en coupe, un appareil 10 de chauffage selon un mode de réalisation de l'invention. De préférence, l'appareil 10 est un appareil de chauffage domestique, ou radiateur. Dans la description qui suit, l'appareil 10 est considéré comme installé dans une pièce d'un bâtiment d'habitation.

L'appareil 10 comprend notamment un élément électrique chauffant principal 12 et un élément inertiel 14 formant une façade de l'appareil 10. L'appareil 10 comprend en outre une carrosserie arrière 16, assemblée à la façade 14 pour former une enveloppe de l'appareil 10. L'enveloppe définit un espace intérieur 17 et un espace extérieur 18 audit appareil.

Dans la suite de la description, les termes « intérieur » et « extérieur » se réfèrent respectivement aux espaces intérieur 17 et extérieur 18 de l'appareil 10. L'espace extérieur 18 est considéré comme limité à la pièce d'habitation où est installé l'appareil 10.

L'appareil 10 comprend en outre un dispositif de soufflage 20. Dans le mode de réalisation de la figure 1, l'appareil 10 comprend en outre un élément électrique chauffant secondaire 22. Le dispositif de soufflage 20 et l'élément électrique chauffant secondaire 22 sont disposés dans l'espace intérieur 17.

L'appareil 10 comprend également un dispositif électronique 23 de régulation de l'alimentation électrique des éléments chauffants 12, 22 et du dispositif de soufflage 20.

La façade 14 est apte à emmagasiner la chaleur émise par les éléments chauffants 12, 22 et à restituer ladite chaleur à un air extérieur à l'appareil 10. La façade 14 est de préférence formée d'un matériau à inertie thermique, notamment de type verre, pierre ou métal tel que la fonte.

De préférence, le matériau de la façade 14 est également émissif, c'est-à-dire apte à émettre un rayonnement infrarouge sous l'effet d'une augmentation de température.

Dans le mode de réalisation de la figure 1, la façade 14 a une forme sensiblement plane, disposée verticalement dans une position de fonctionnement de l'appareil 10. Selon des variantes, la façade 14 a une forme recourbée ou à facettes.

La façade 14 comprend une face avant 25 et une face arrière 26, respectivement orientées vers l'extérieur et vers l'intérieur de l'appareil 10.

L'élément électrique chauffant principal 12 est une résistance électrique, en contact thermique avec la face arrière 26 de la façade 14. Dans le mode de réalisation de la figure 1, la résistance électrique 12 est sérigraphiée sur un film plastique 28, ledit film plastique étant collé sur la face arrière 26 de la façade. Selon une variante de réalisation non représentée, la résistance électrique est formée par un câble chauffant plaqué sur la face arrière 26 de la façade.

La carrosserie arrière 16 est par exemple réalisée en métal et comporte des moyens (non représentés) de fixation à une paroi verticale. Ladite carrosserie arrière 16 comporte en outre des ouvertures inférieures 30 et supérieures 31 permettant une circulation d'air sensiblement verticale dans l'espace intérieur 17.

Le dispositif de soufflage 20 est de préférence situé en partie basse de l'appareil 10, notamment à proximité des ouvertures inférieures 30 de la carrosserie arrière 16. Le dispositif de soufflage 20 comporte préférentiellement au moins un ventilateur, et plus préférentiellement deux ventilateurs, par exemple disposés de part et d'autre d'un plan médian vertical de l'appareil 10. Le dispositif de soufflage 20 est apte à diriger un flux d'air 21 vers la résistance électrique 12 et vers la façade 14. Ledit flux d'air est par exemple orienté obliquement, du bas vers le haut.

L'élément chauffant secondaire 22 est de préférence un élément de chauffage par convection. L'élément chauffant secondaire 22 comporte par exemple une résistance électrique noyée dans un corps de chauffe en fonte, en céramique ou en aluminium. Ledit corps de chauffe est par exemple fixé à la carrosserie arrière 16.

On considère un ratio entre des puissances maximales Pₘₐₓ₁ et Pₘₐₓ₂ d'alimentation des éléments électriques chauffants, respectivement principal 12 et secondaire 22. De préférence, ledit ratio est compris entre 1 et 4.

Le dispositif électronique de régulation 23 est représenté schématiquement à la figure 2. Le dispositif électronique de régulation 23 comporte notamment un boîtier de commande 32, situé en partie supérieure de l'appareil 10. Le boîtier de commande 32 comporte par exemple un microprocesseur 33, une mémoire de programme 34 et au moins un bus de communication 36.

Le boîtier de commande 32 comporte également une interface homme/machine 40, de type écran/clavier, permettant à un utilisateur de sélectionner des paramètres du procédé de régulation, tels qu'une température de consigne T_{c} de l'appareil 10.

Le dispositif électronique de régulation 23 comporte également une sonde de température 42, située en partie inférieure de l'appareil 10 et reliée au boîtier de commande 32. La sonde 42 permet de mesurer une température T de l'air extérieur à l'appareil 10.

De manière optionnelle, le dispositif électronique de régulation 23 comporte en outre un détecteur de présence 43, apte à détecter une présence à proximité de l'appareil 10. Il s'agit par exemple d'un détecteur optique, notamment infra-rouge, ou d'un détecteur acoustique.

Le dispositif électronique de régulation 23 est apte à alimenter électriquement les résistances électriques des éléments chauffants 12, 22, ainsi que le dispositif de soufflage 20.

Plus précisément, la mémoire de programme 34 renferme un programme 44 contrôlant l'alimentation électrique des éléments chauffants 12, 22, en fonction de la température extérieure T mesurée par la sonde 42 et de la température de consigne T_{c} réglée au niveau de l'interface 40.

Dans le cas où l'appareil 10 comporte un élément chauffant secondaire 22, l'élément chauffant principal 12 est de préférence prioritaire au niveau du programme 44. En d'autres termes, tant que la puissance d'alimentation de la résistance 12 est inférieure à la puissance maximale Pₘₐₓ₁, la résistance de l'élément chauffant secondaire 22 n'est pas alimentée en électricité.

Le programme 44 prévoit un premier mode de fonctionnement de l'appareil 10, dit mode économique. Le mode économique est destiné à maintenir la température extérieure T à une première valeur T₁. De préférence, T₁ est égale à T_{c} - ΔT, T_{c} étant la température de consigne réglable au niveau de l'interface 40 et ΔT étant un intervalle prédéfini dans la mémoire de programme 34.

Le programme 44 prévoit en outre un deuxième mode de fonctionnement de l'appareil 10, dit mode confort. Le mode confort est destiné à maintenir la température extérieure T à une deuxième valeur T₂, supérieure à la première valeur T₁. Dans la suite de la description, on considère que T₂ est égale à la température de consigne T_{c}.

De préférence, dans le mode économique comme dans le mode confort, le dispositif de soufflage 20 est par défaut à l'arrêt. En d'autres termes, le fonctionnement de l'appareil 10 est prioritairement basé sur le rayonnement, soit l'émission d'infra-rouges par la façade 14, et sur la convection naturelle, soit le transfert de chaleur des éléments chauffants 12, 22 à l'air sans soufflage.

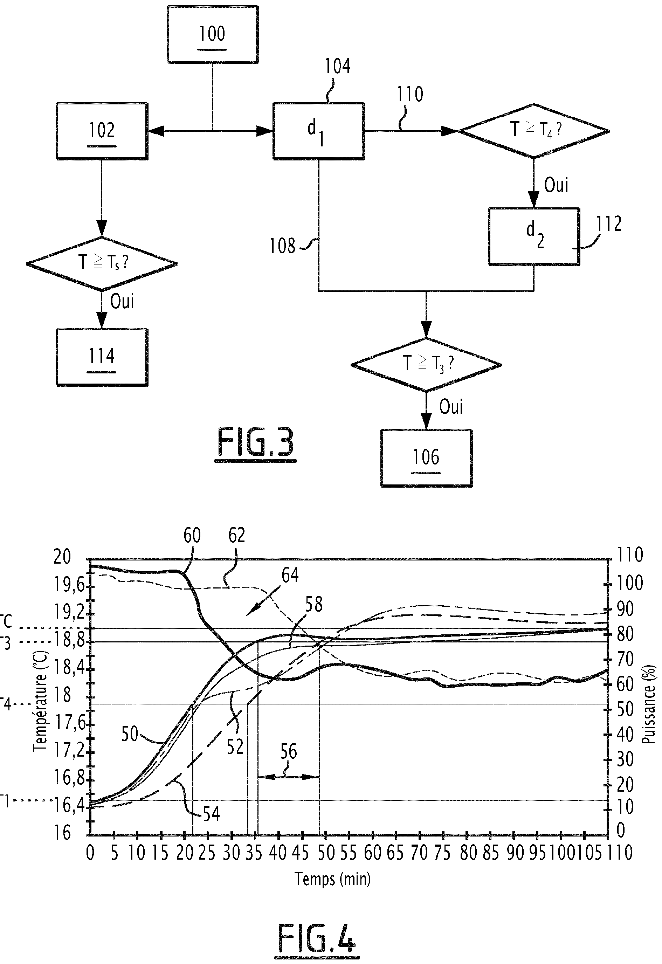

Lors du passage du mode économique au mode confort, le programme 44 exécute les étapes d'un procédé selon un mode de réalisation de l'invention, tel que décrit ci-dessous. Ledit procédé est représenté par un logigramme à la figure 3.

L'appareil 10 étant en mode économique, une première étape du procédé est la réception 100 par le programme 44 d'un ordre de passage en mode confort. Cet ordre est par exemple généré par une programmation horaire de l'appareil 10. Alternativement, l'ordre de passage en mode confort est généré par la détection d'une présence par le détecteur 43.

L'ordre de passage en mode confort conduit à l'alimentation électrique 102 des éléments chauffants 12, 22, ou à l'augmentation de la puissance fournie par rapport au mode économique. De préférence, à réception de l'ordre de passage en mode confort, chacun desdits éléments chauffant est alimenté à sa puissance maximale, respectivement Pₘₐₓ₁ et Pₘₐₓ₂.

De manière sensiblement simultanée, le programme 44 déclenche 104 le fonctionnement du dispositif de soufflage 20, soit du ou des ventilateurs, selon un premier débit d'air d₁. De préférence, d₁ est égal à ou proche d'un débit d'air maximal dudit dispositif de soufflage.

Le dispositif de soufflage 20 dirige ainsi un flux d'air 21 sur la résistance 12 et sur la façade 14, ledit flux d'air étant dirigé du bas vers le haut. En d'autres termes, de l'air extérieur entre dans l'espace intérieur 17 par les ouvertures inférieures 30 de la carrosserie arrière 16. Ledit air est réchauffé au contact de la résistance 12 et/ou de la façade 14 et ressort ensuite dans l'espace extérieur 18 par les ouvertures supérieures 31.

De préférence, l'espace intérieur 17 est suffisamment restreint pour que le flux d'air 21 soit également réchauffé par l'élément chauffant secondaire 22.

L'air extérieur est ainsi réchauffé par convection forcée au sein de l'appareil 10, ce qui accélère la montée de la température T par rapport à un fonctionnement en rayonnement/convection naturelle.

Le dispositif de soufflage 20 est ensuite arrêté 106 lorsque la température T de l'air extérieur, mesurée par la sonde 42, atteint une troisième valeur T₃ définie en fonction de la température de consigne T_{c}. T₃ est par exemple calculée selon une formule prédéfinie dans la mémoire de programme 34, telle que T₃ = T₁ + α(ΔT), avec 0< α ≤1. En d'autres termes, le dispositif de soufflage 20 s'arrête lorsque la température de l'air extérieur a atteint, ou au moins s'est suffisamment rapprochée de, la température de consigne T_{c}.

De préférence, la valeur α est comprise entre 70% et 99%, plus préférentiellement entre 80% et 95%.

Selon une première variante du procédé, représentée par la flèche 108 sur la figure 3, le débit d'air du dispositif de soufflage 20 reste sensiblement constant jusqu'à l'étape d'arrêt 106.

Le graphique de la figure 4 représente la variation de la température extérieure T en fonction du temps, pour un appareil de chauffage 10 tel que décrit ci-dessus, au cours d'un procédé selon la première variante ci-dessus. La courbe 50 représente un premier cas dit « dynamique », correspondant à une valeur α égale à 95%. La courbe 52 représente un deuxième cas correspondant à une valeur α égale à 65%.

La courbe 54 représente un troisième cas de référence, dit « statique ». Dans ledit cas « statique », le dispositif de soufflage 20 n'est pas utilisé, les autres étapes du procédé ci-dessus étant conservées.

L'origine de l'axe des temps correspond à l'ordre de passage du mode économique au mode confort. Dans l'exemple représenté à la figure 4, T_{c} = 19 °C ; ΔT = 3,5 °C ; et la puissance électrique totale de l'appareil 10, correspondant à Pₘₐₓ₁ + Pₘₐₓ₂, est de 1000 W.

Il est constaté que dans le cas « dynamique », la température de 18,8 °C (soit T_{c} - 5% ΔT) est atteinte au bout de 35 minutes, contre 48 minutes dans le cas « statique ». Un gain de temps 56 pour la montée en température, lié à l'utilisation d'un soufflage, est donc d'environ 27%.

Dans le cas de la courbe 52, à compter de l'arrêt du dispositif de soufflage 20, on constate que la montée en température ralentit brutalement. En effet, le matériau inertiel de la façade 14, précédemment refroidi par le flux d'air 21, absorbe l'essentiel de la chaleur émise par la résistance 12. A partir de l'arrêt du dispositif de soufflage 20, la courbe 52 se rapproche donc de la courbe 54 (cas « statique »).

Afin d'optimiser à la fois le confort de chauffe et les nuisances sonores liées au dispositif de soufflage 20, une deuxième variante du procédé prévoit une diminution progressive du débit d'air jusqu'à l'arrêt du soufflage.

Selon cette deuxième variante, représentée par la flèche 110 sur la figure 3, l'étape 104 correspond à une première phase de fonctionnement du dispositif de soufflage 20, selon le premier débit d'air d₁. La température T augmente, jusqu'à atteindre une quatrième valeur T₄ définie en fonction de la température de consigne T_{c}. T₄ est par exemple calculée selon une formule prédéfinie dans la mémoire de programme 34, telle que T₄ = T₁ + β(ΔT), avec 0< β< α. Préférentiellement, la valeur β est comprise entre 50% et 90%, plus préférentiellement entre 60% et 70%.

Le programme 44 passe alors à une deuxième phase 112 de fonctionnement du dispositif de soufflage 20 selon un deuxième débit d'air d₂ avec 0<d₂<d₁. La température T continue d'augmenter, jusqu'à atteindre la valeur T₃, ce qui conduit à l'arrêt total du dispositif de soufflage 20.

La diminution du débit d'air permet de limiter le bruit du dispositif de soufflage 20 lorsqu'un certain confort de chauffe est déjà assuré dans la pièce.

Selon un premier mode de réalisation, le deuxième débit d'air d₂ est constant sur toute la durée de la deuxième phase 112, avec par exemple d₂/d₁ = 30%.

Selon un deuxième mode de réalisation, d₂ décroît au cours de la deuxième phase 112, jusqu'à l'étape 106 d'arrêt du dispositif de soufflage 20. La décroissance de d₂ durant la deuxième phase 112 s'effectue selon un modèle de forme prédéterminée, mémorisée dans la mémoire de programme 34. Il s'agit par exemple d'une décroissance par paliers, ou encore d'une décroissance continue, notamment linéaire.

Selon une première alternative du deuxième mode de réalisation, une durée τ₂ de décroissance du débit d₂ entre les valeurs d₁ et 0 est prédéfinie dans la mémoire de programme 34, à partir de données expérimentales.

Il est cependant difficile de paramétrer la durée τ₂ avant l'installation de l'appareil 10, car la vitesse de montée en température dépend de plusieurs paramètres extérieurs audit appareil. De tels paramètres sont notamment la taille de la pièce d'installation, ainsi que les caractéristiques thermiques du bâtiment.

Ainsi, si la durée τ₂ est choisie trop courte, le dispositif de soufflage 20 s'arrête avant que la température T n'ait atteint la troisième valeur T₃. Si la durée τ₂ est choisie trop longue, les nuisances sonores liées au fonctionnement du dispositif de soufflage 20 ne sont pas optimisées.

Aussi, selon une deuxième alternative du deuxième mode de réalisation, la durée τ₂ de décroissance du débit d₂ entre les valeurs d₁ et 0 est calculée en fonction d'une durée τ₁ de la première phase 104.

On considère un exemple où β = 63% et α = 95%. La durée τ₁ de la première phase 104 est mesurée, entre un instant t₀ de mise en fonctionnement du dispositif de soufflage et un instant t₁ où la température T atteint la quatrième valeur T₄. Puis, à compter dudit instant t₁, définissant le début de la deuxième phase 112, le débit d'air d₂ du dispositif de soufflage diminue selon un modèle de forme prédéterminée, par exemple linéaire. Ledit modèle est configuré de sorte à faire passer le débit d'air de d₁ à 0 sur une durée τ₂ calculée en fonction de la durée τ₁ précédemment mesurée.

Le programme 44 prévoit par exemple que τ₁ = τ_{2.} D'autres rapports peuvent être définis entre les durées τ₁ et τ₂, selon les valeurs de α et de β.

Si la température T atteint la troisième valeur T₃ avant la fin de la durée τ₂, le dispositif de soufflage 20 est arrêté (étape 106). Ainsi, dans cet exemple, la deuxième phase 112 est configurée pour avoir une durée maximale égale à la durée τ₁ de la première phase 104.

L'exemple précédemment décrit est illustré sur la figure 4 par la courbe 58, représentant la variation de température T. Cette courbe 58 est très proche de la courbe 50 du cas « dynamique ». L'exemple précédemment décrit assure donc un confort de chauffe comparable au cas « dynamique », tout en diminuant les nuisances sonores du dispositif de soufflage 20.

Selon une troisième alternative du deuxième mode de réalisation, le programme 44 prévoit une détermination de τ₂ par auto-apprentissage de l'appareil 10. En d'autres termes, la durée τ₂ est calculée sur la base d'une moyenne des durées τ₁ mesurées dans des phases précédentes de passage du mode économique au mode confort.

En parallèle au fonctionnement du dispositif de soufflage 20, il est possible de faire varier l'alimentation électrique des éléments chauffants 12, 22 en fonction du temps, afin d'éviter une surchauffe de l'appareil 10.

Par exemple, le programme 44 prévoit que l'étape 102 correspond à une première phase de fonctionnement des éléments chauffants 12, 22, à une première puissance électrique. De préférence, à réception de l'ordre de passage en mode confort, chacun desdits éléments chauffant est alimenté à sa puissance maximale, respectivement Pₘₐₓ₁ et Pₘₐₓ₂.

La température T augmente, jusqu'à atteindre une cinquième valeur T₅ définie en fonction de la température de consigne T_{c}. Par exemple, T₅ est calculée selon une formule prédéfinie dans la mémoire de programme 34, telle que T₅ = T₁ + γ(ΔT), avec 0< γ< α. Préférentiellement, la valeur γ est comprise entre 50% et 90%, plus préférentiellement entre 60% et 70%.

Le programme 44 passe alors à une deuxième phase 114 de fonctionnement des éléments chauffants 12, 22. Durant cette deuxième phase, la puissance totale fournie aux éléments chauffants 12, 22 diminue progressivement.

De préférence, la puissance fournie à l'élément chauffant principal 12 est sensiblement maintenue à Pₘₐₓ₁ tant que la température de consigne T_{c}, ou encore la troisième valeur T₃, n'est pas atteinte. Durant la deuxième phase 114, c'est donc la puissance fournie à l'élément chauffant secondaire 22 qui diminue progressivement.

Les courbes 60 et 62 de la figure 4 représentent respectivement les variations de la puissance électrique fournie en fonction du temps, respectivement dans les cas « dynamique » et « statique » tels que décrits ci-dessus. La puissance électrique fournie est exprimée en pourcentage de la puissance totale de l'appareil 10.

On constate que l'utilisation d'un soufflage permet à la courbe 60 du cas « dynamique » de diminuer plus tôt que dans le cas « statique ». Un espace 64 entre les courbes 60 et 62 illustre une économie d'énergie pour la montée en température, liée à l'utilisation d'un soufflage. Cette économie d'énergie est de l'ordre de 6%. Un tel gain énergétique compense largement l'énergie consommée par les ventilateurs du dispositif de soufflage 20.

Dans le cas « dynamique » décrit ci-dessus, le soufflage est maintenu au premier débit d₁ jusqu'à l'obtention de la troisième valeur T₃ de la température T. Selon une variante, le dispositif de soufflage 20 est synchronisé avec les éléments chauffants. Plus précisément, le programme 44 correspond à la deuxième variante décrite ci-dessus, représentée par la flèche 110 sur la figure 3, avec T₅ = T₄. Ainsi, à partir du moment où T atteint la quatrième valeur T₄, le débit du dispositif de soufflage 20 et la puissance fournie à l'élément chauffant secondaire 22 diminuent conjointement.

De préférence, le dispositif électronique de régulation 23 offre la possibilité à l'utilisateur de désactiver l'exécution du programme 44. Ainsi, ledit utilisateur peut s'affranchir du bruit lié au dispositif de soufflage 20 s'il est présent dans la pièce.

Selon un mode de réalisation, dans le cas où l'ordre 100 de passage en mode confort n'est pas lié au détecteur de présence 43, le programme 44 prévoit un arrêt du dispositif de soufflage 20 tant que ledit détecteur 43 détecte une présence à proximité de l'appareil 10. Ainsi, le soufflage fonctionne uniquement lorsque la pièce est inoccupée, pour diminuer les nuisances sonores.

Le procédé tel que décrit ci-dessus permet des remontées en température plus rapides que dans le cas des appareils dépourvus de dispositif de soufflage. En conséquence, il est possible de configurer un intervalle ΔT, entre les températures des modes économique et confort, plus important que pour les radiateurs de l'état de la technique.

De préférence, ΔT est supérieur à 3,0 °C et plus préférentiellement compris entre 3,5 °C et 5,0 °C. Un tel procédé permet donc des économies d'énergie en mode économique, sans dégrader le confort de chauffe en mode confort.

De même, le procédé décrit ci-dessus est utilisable dans le cas d'un passage d'un mode hors gel au mode confort. Le mode hors gel est caractérisé par une température T_{hg} plus basse que le mode économique. Par exemple T_{hg} = T_{c} - 10 °C.

## Revendications

1. Procédé de régulation d'un appareil de chauffage (10), ledit appareil comprenant :
- une enveloppe (14, 16) définissant un espace intérieur (17) et un espace extérieur (18) audit appareil ;
- un élément chauffant électrique (12, 22) apte à convertir une énergie électrique en chaleur, situé dans l'espace intérieur ;
- un élément inertiel (14) formé d'un matériau à inertie thermique, apte à emmagasiner la chaleur émise par l'élément chauffant électrique et à restituer ladite chaleur à un air extérieur à l'appareil ;
- un capteur (42) d'une température (T) dudit air extérieur ;
ledit procédé de régulation comprenant un premier mode de fonctionnement de l'appareil, destiné à maintenir l'air extérieur à une première température (T₁) et un deuxième mode de fonctionnement de l'appareil, destiné à maintenir l'air extérieur à une deuxième température (T_{c}) supérieure à la première température ;
**caractérisé en ce que** l'appareil de chauffage comprend en outre un dispositif de soufflage (20), apte à diriger un flux d'air (21) vers l'élément chauffant électrique et/ou vers l'élément inertiel, ledit flux d'air étant en communication avec l'air extérieur ;
et **en ce que** ledit procédé comprend les étapes suivantes :
- l'appareil étant dans le premier mode de fonctionnement et le dispositif de soufflage étant à l'arrêt, réception (100) d'un ordre de passage au deuxième mode de fonctionnement ; puis
- augmentation (102) de l'énergie électrique fournie à l'élément chauffant, et mise en marche (104) du dispositif de soufflage ; puis
- arrêt (106) du dispositif de soufflage si la température (T) de l'air extérieur atteint une première valeur prédéterminée (T₃) égale à T₁ + α(T_{c} - T₁), telle que 0< α ≤1.

2. Procédé selon la revendication 1, dans lequel α est compris entre 70% et 99%, plus préférentiellement entre 80% et 95%.

3. Procédé selon la revendication 1 ou la revendication 2, dans lequel :
- lors de la mise en marche (104) du dispositif de soufflage, ledit dispositif fonctionne selon un premier débit d'air (d₁) ; puis
- si la température de l'air extérieur atteint une deuxième valeur prédéterminée (T₄) égale à T₁ + β(T_{c} - T₁), avec 0< β < α, le dispositif de soufflage fonctionne (112) selon un deuxième débit d'air (d₂) tel que 0<d₂< d₁.

4. Procédé selon la revendication 3, dans lequel le premier débit d'air (d₁) est sensiblement constant et le deuxième débit d'air (d₂) est décroissant dans le temps.

5. Procédé selon la revendication 4, dans lequel
- une première durée (τ₁) est mesurée entre un premier instant (t₀) de mise en marche du dispositif de soufflage et un deuxième instant (t₁) où la température de l'air extérieur atteint la deuxième valeur prédéterminée (T₄) ; puis
- à compter dudit instant deuxième instant (t₁), un débit d'air du dispositif de soufflage varie selon un modèle de forme prédéterminée, configuré de sorte à faire diminuer ledit débit d'air entre les valeurs d₁ et 0 sur une deuxième durée (τ₂) calculée en fonction de la première durée.

6. Procédé selon l'une des revendications 3 à 5, dans lequel β est compris entre 50% et 90%, plus préférentiellement entre 60% et 70%.

7. Procédé selon l'une des revendications précédentes, dans lequel :
- lors de l'augmentation (102) de l'énergie électrique fournie à l'élément chauffant, une puissance électrique est fournie audit élément chauffant ; puis
- si la température de l'air extérieur atteint une troisième valeur prédéterminée (T₅) égale à T₁ + γ(T_{c} - T₁), avec 0< γ < α, la puissance électrique fournie diminue.

8. Procédé selon l'une des revendications précédentes, dans lequel l'appareil de chauffage (10) comporte en outre un détecteur (43) de présence à proximité dudit appareil ; le procédé comprenant en outre :
- une étape d'arrêt du dispositif de soufflage (20) lorsqu'une présence est détectée ; et
- une étape de remise en marche du dispositif de soufflage lorsqu'aucune présence n'est détectée, et si la température (T) de l'air extérieur est inférieure à la première valeur prédéterminée (T₃).

9. Appareil de chauffage (10) comprenant :
- une enveloppe (14, 16) définissant un espace intérieur (17) et un espace extérieur (18) audit appareil ;
- un élément chauffant électrique (12, 22) apte à convertir une énergie électrique en chaleur, situé dans l'espace intérieur ;
- un élément inertiel (14) formé d'un matériau à inertie thermique, apte à emmagasiner la chaleur émise par l'élément chauffant électrique et à restituer ladite chaleur à un air extérieur à l'appareil ;
- un capteur (42) d'une température (T) dudit air extérieur ;
- un dispositif de soufflage (20), apte à diriger un flux d'air vers l'élément chauffant électrique et/ou vers l'élément inertiel, ledit flux d'air étant en communication avec l'air extérieur ;
ledit appareil de chauffage étant muni de moyens (23, 44) de mise en oeuvre d'un procédé de régulation selon l'une des revendications précédentes.

10. Appareil de chauffage selon la revendication 9, dans lequel l'élément inertiel (14) forme une façade incluse dans l'enveloppe de l'appareil, ladite façade ayant une face interne (26) orientée vers l'intérieur de l'appareil, l'élément chauffant électrique (12) étant au contact de ladite face interne.

11. Appareil de chauffage selon la revendication 9 ou la revendication 10, dans lequel l'élément inertiel (14) est formé d'un matériau apte à émettre un rayonnement infrarouge sous l'effet d'une augmentation de sa température.

12. Appareil de chauffage selon l'une des revendications 9 à 11, dans lequel le dispositif de soufflage (20) comprend au moins un ventilateur, de préférence au moins deux ventilateurs, situé(s) dans l'espace intérieur (17).

## Patentansprüche

1. Regelungsverfahren einer Heizvorrichtung (10), wobei die Vorrichtung aufweist:
- eine Ummantelung (14, 16), welche einen Innenraum (17) und einen Außenraum (18) der Vorrichtung definiert,
- ein im Innenraum angeordnetes elektrisches Heizelement (12, 22), welches eingerichtet ist zum Umwandeln elektrischer Energie in Wärme,
- ein aus einem thermisch-inerten Material geformtes träges Element (14), welches zum Speichern der vom elektrischen Heizelement emittierten Wärme und zum Wiederabgeben der Wärme an Außenluft an der Vorrichtung eingerichtet ist,
- einen Sensor (42) einer Temperatur (T) der Außenluft,
wobei das Regelungsverfahren einen ersten Funktionsmodus der Vorrichtung, welcher zum Halten der Außenluft auf einer ersten Temperatur (T₁) bestimmt ist, und einen zweiten Funktionsmodus der Vorrichtung aufweist, welcher zum Halten der Außenluft auf einer zweiten Temperatur (T_{c}) bestimmt ist, die größer ist als die erste Temperatur,
**dadurch gekennzeichnet, dass** die Heizvorrichtung weiter eine Gebläsevorrichtung (20) aufweist, welche zum Leiten eines Luftstroms (21) in Richtung zum elektrischen Heizelement und/oder in Richtung zum trägen Element eingerichtet ist, wobei sich der Luftstrom mit der Außenluft in Kommunikation befindet,
und dass das Verfahren die folgenden Schritte aufweist:
- die Vorrichtung befindet sich im ersten Funktionsmodus und die Gebläsevorrichtung ist im Stillstand, Empfangen (100) eines Befehls zum Übergang in den zweiten Funktionsmodus, dann
- Steigern (102) der elektrischen Energie, mit welcher das Heizelement versorgt wird, und In-Betrieb-Setzen (104) der Gebläsevorrichtung, dann
- Stoppen (106) der Gebläsevorrichtung, wenn die Temperatur (T) der Außenluft einen ersten vorbestimmten Wert (T₃) erreicht, welcher zu T₁ + α(T_{c} - T₁) gleich ist, derart, dass 0 < α ≤ 1.

2. Verfahren gemäß Anspruch 1, bei welchem α zwischen 70% und 99% liegt, weiter bevorzug zwischen 80% und 95%.

3. Verfahren gemäß Anspruch 1 oder Anspruch 2, bei welchem:
- beim Betrieb (104) der Gebläsevorrichtung die Vorrichtung mit einem ersten Luftdurchfluss (d₁) wirkt, dann
- wenn die Temperatur der Außenluft einen zweiten vorbestimmten Wert (T₄) erreicht, welcher zu T₁ + β(T_{c} - T₁) gleich ist, mit 0 < β < α, die Gebläsevorrichtung mit einem zweiten Luftdurchfluss (d₂) wirkt (112), derart, dass 0 < d₂ < d₁.

4. Verfahren gemäß Anspruch 3, bei welchem der erste Luftdurchfluss (d₁) im Wesentlichen konstant ist und der zweite Luftdurchfluss (d₂) über die Zeit abnehmend ist.

5. Verfahren gemäß Anspruch 4, bei welchem
- eine erste Dauer (τ₁) zwischen einem ersten Zeitpunkt (t₀) des In-Betrieb-Setzens der Gebläsevorrichtung und einem zweiten Zeitpunkt (t₁) gemessen wird, bei welchem die Temperatur der Außenluft den zweiten vorbestimmten Wert (T₄) erreicht, dann
- ab dem Zeitpunkt des zweiten Zeitpunkts (t₁) über eine zweite Dauer (τ₂), welche als eine Funktion der ersten Dauer berechnet wird, ein Luftdurchfluss der Gebläsevorrichtung gemäß einem Modell in vorbestimmter Form variiert, das in der Art eingerichtet ist, den Luftdurchfluss zwischen den Werten d₁ und 0 abnehmen zu lassen.

6. Verfahren gemäß den Ansprüchen 3 bis 5, bei welchem β zwischen 50% und 90% liegt, weiter bevorzugt zwischen 60% und 70%.

7. Verfahren gemäß einem der vorhergehenden Ansprüche, bei welchem:
- beim Steigern (102) der elektrischen Energie, mit welcher das Heizelement versorgt wird, das Heizelement mit einer elektrischen Leistung versorgt wird, dann
- wenn die Temperatur der Außenluft einen dritten vorbestimmten Wert (T₅) erreicht, welcher zu T₁ + γ(T_{c} - T₁) gleich ist, mit 0 < γ < α, die zugeführte elektrische Leistung abnimmt.

8. Verfahren gemäß einem der vorhergehenden Ansprüche, bei welchem die Heizvorrichtung (10) weiter einen In-der-Nähe-der-Vorrichtung-Anwesenheitssensor (43) aufweist, wobei das Verfahren weiter umfasst:
- einen Schritt des Stoppens der Gebläsevorrichtung (20), wenn eine Anwesenheit erfasst wird, und
- einen Schritt des Wieder-In-Betrieb-Setzens der Gebläsevorrichtung, wenn keine Anwesenheit erfasst wird und wenn die Temperatur (T) der Außenluft kleiner als der erste vorbestimmte Wert (T₃) ist.

9. Heizvorrichtung (10), aufweisend:
- eine Ummantelung (14, 16), welche einen Innenraum (17) und einen Außenraum (18) der Vorrichtung definiert,
- ein im Innenraum angeordnetes elektrisches Heizelement (12, 22), welches eingerichtet ist zum Umwandeln elektrischer Energie in Wärme,
- ein aus einem thermisch-inerten Material geformtes träges Element (14), welches zum Speichern der vom elektrischen Heizelement emittierten Wärme und zum Wiederabgeben der Wärme an Außenluft an der Vorrichtung eingerichtet ist,
- einen Sensor (42) einer Temperatur (T) der Außenluft,
- eine Gebläsevorrichtung (20), welche zum Leiten eines Luftstroms (21) in Richtung zum elektrischen Heizelement und/oder in Richtung zum trägen Element eingerichtet ist, wobei sich der Luftstrom mit der Außenluft in Kommunikation befindet,
wobei die Heizvorrichtung mit Mitteln (23, 44) zum Ausführen eines Regelungsverfahrens gemäß einem der vorhergehenden Ansprüche ausgestattet ist.

10. Heizvorrichtung gemäß Anspruch 9, bei welchem das träge Element (14) eine Außenseite ausbildet, welche in der Ummantelung der Vorrichtung enthalten ist, wobei die Außenseite eine Innenseite (26) aufweist, die zum Inneren der Vorrichtung gewandt ist, wobei sich das elektrische Heizelement (12) mit der Innenseite in Kontakt befindet.

11. Heizvorrichtung gemäß Anspruch 9 oder Anspruch 10, bei welcher das träge Element (14) aus einem Material geformt ist, das zum Emittieren einer Infrarotstrahlung mit der Wirkung des Steigerns der Temperatur eingerichtet ist.

12. Heizvorrichtung gemäß einem der Ansprüche 9 bis 11, bei welcher die Gebläsevorrichtung (20) zumindest ein Gebläse aufweist, bevorzugt zumindest zwei Gebläse, welches/welche im Innenraum (17) angeordnet ist/sind.

## Claims

1. Method of regulating a heating apparatus (10), wherein the apparatus comprises:
- an envelope (14, 16) defining an interior space (17) and an outer space (18) to the apparatus;
- an electric heating element (12, 22) adapted to convert electrical energy into heat and located in the interior space;
- an inertial element (14) made of a material with thermal inertia, capable of storing the heat emitted by the electric heating element and of returning the heat to air outside the apparatus;
- a sensor (42) for a temperature (T) of the outside air;
wherein the control method comprises a first mode of operation of the apparatus for maintaining the outside air at a first temperature (T₁) and a second mode of operation of the apparatus for maintaining outside air at a second temperature (T_{c}) that is greater than the first temperature;
**characterized in that** the heating apparatus further comprises a blowing device (20), designed to direct an air flow (21) towards the electric heating element and/or the inertial element, wherein the air flow is in communication with the outside air;
and wherein the method comprises the following steps:
- as the apparatus is in the first mode of operation and the blowing device is at a standstill, reception (100) of a command to change to the second mode of operation; then
- increasing (102) the electrical energy supplied to the heating element, and starting (104) of the blowing device; then
- stopping (106) of the blowing device if the temperature (T) of the outside air reaches a first predetermined value (T₃) equal to T₁ + α(T_{c} - T₁), such that 0 < α ≤ 1.

2. Method according to claim 1, wherein α lies between 70% and 99%, more preferably between 80% and 95%.

3. Method according to claim 1 or claim 2, wherein:
- when the blowing device is switched on (104), the device operates according to a first air flow rate (d₁); then
- if the outside air temperature reaches a second predetermined value (T₄) equal to T₁ + β(T_{c} - T₁), where 0 < β < α, the blowing device operates (112) at a second air flow rate (d₂) such that 0 < d₂ < d₁.

4. Method according to claim 3, wherein the first air flow (d₁) is substantially constant and the second air flow (d₂) decreases over time.

5. Method according to claim 4, wherein
- a first period (τ₁) is measured between a first instant (t₀) for starting the blowing device and a second instant (t₁) when the temperature of the outside air reaches the second predetermined value (T₄); then
- from the second instant (t₁), an air flow of the blowing device varies according to a predetermined model form, and designed to decrease the air flow between the values d₁ and 0 over a second period (τ₂) calculated as a function of the first period.

6. Method according to one of the claims 3 to 5, wherein β lies between 50% and 90%, more preferably between 60% and 70%.

7. Method according to one of the preceding claims, wherein
- during the increase (102) of the electric energy supplied to the heating element, electric power is supplied to the heating element; then
- if the outside air temperature reaches a third predetermined value (T₅) equal to T₁ + γ(T_{c} - T₁), where 0 < γ < α, the electric power supplied decreases.

8. Method according to one of the preceding claims, wherein the heater (10) further comprises a presence detector (43) near the apparatus; wherein the method further comprises:
- a step of stopping the blowing device (20) when a presence is detected; and
- a step of restarting the blowing device when no presence is detected, and if the temperature (T) of the outside air is less than the first predetermined value (T₃).

9. Heating apparatus (10) comprises:
- an envelope (14, 16) defining an interior space (17) and an outer space (18) to the heater;
- an electric heating element (12, 22) designed to convert electrical energy into heat and located in the interior space;
- an inertial element (14) made of a material with thermal inertia and capable of storing the heat emitted by the electric heating element and of returning the heat to air outside the apparatus;
- a sensor (42) for a temperature (T) of the outside air;
- a blowing device (20), designed to direct an air flow towards the electric heating element and/or to the inertial element, and the air flow is in communication with the outside air;
wherein the heating apparatus is provided with means (23, 44) for implementing a control method according to one of the preceding claims.

10. Heating apparatus (10) according to claim 9, wherein the inertial element (14) forms a front panel included in the envelope of the apparatus, wherein the front panel has an inner face (26) facing towards the inside of the heating apparatus, and wherein the electric heating element (12) is in contact with the inner face.

11. Heating apparatus according to claim 9 or claim 10, wherein the inertial element (14) is made of a material capable of emitting infrared radiation under the effect of an increase in its temperature.

12. Heating apparatus according to one of the claims 9 to 11, wherein the blowing device (20) comprises at least one fan, preferably at least two fans, located in the interior space (17).
